# EUROPÄISCHE PATENTSCHRIFT

(11) **EP 1 073 070 B1**
(45) Veröffentlichungstag und Bekanntmachung des Hinweises auf die Patenterteilung: **26.04.2006**
(21) Anmeldenummer: 00115374.1
(22) Anmeldetag: 15.07.2000
(51) Int. Cl.: H01F 7/08, H01F 7/16

(54) **Elektromagnet und hydraulisches Ventil mit einem Elektromagneten**
Electromagnet and hydraulic valve comprising an electromagnet
Electro-aimant et soupape hydraulique comprenant un électro-aimant

(30) Priorität: 24.07.1999 DE 19934846
(43) Veröffentlichungstag der Anmeldung: 31.01.2001
(73) Patentinhaber: Hydraulik Ring GmbH, 09212 Limbach-Oberfrohna (DE)
(72) Erfinder: Cornea, Marius, D-97816 Lohr/Main (DE); Leutwein, Hans-Ulrich, D-97846 Partenstein (DE); Lippert, Lorenz, D-97737 Gemünden (DE)
(74) Vertreter: Kohl, Karl-Heinz

(56) Entgegenhaltungen:
- DE-A- 4 343 118
- DE-A- 19 716 517
- DE-U- 9 200 549
- US-A- 1 997 550
- US-A- 5 402 093

## Beschreibung

Die Erfindung betrifft zunächst einen Elektromagneten, der insbesondere zur Betätigung eines hydraulischen Ventils eines Kraftfahrzeugs dient und der die Merkmale aus dem Oberbegriff des Patentanspruchs 1 aufweist.

Ein solcher Elektromagnet ist z.B. aus der DE 197 17 445 A1 oder aus der DE 195 04 185 A1 bekannt. Bei diesen Elektromagneten ist der Ankerstößel aus vollem Stangenmaterial hergestellt, das amagnetische Eigenschaften hat. Zwischen den einander zugewandten Stirnseiten von Magnetanker und Polkern ist eine Antiklebscheibe angeordnet, die den Ankerstößel umgibt und deren Stärke einen minimalen axialen Luftspalt zwischen dem Magnetanker und dem Polkern bestimmt. Die Antiklebscheibe ist als separates Teil auf den Ankerstößel aufzufädeln und gemeinsam mit dem Magnetanker und dem in eine Sackbohrung des Magnetankers eingepreßten Ankerstößel zu montieren. Insgesamt ist die Herstellung der Einzelteile und ihre Montage aufwendig und teuer.

Aus der US 5 402 093 ist ein Elektromagnet bekannt, bei dem der Ankerstößel einen Zentralen Ausgleichskanal aufweist und einstückig mit der Antiklebscheibe aus Kunststoff gefertigt ist.

Der Erfindung liegt deshalb die Aufgabe zugrunde, einen Elektromagneten, der die Merkmale aus dem Oberbegriff des Patentanspruchs 1 aufweist, so weiterzuentwickeln, daß er auf kostengünstige Weise hergestellt werden kann.

Das angestrebte Ziel wird erfindungsgemäß dadurch erreicht, daß bei dem Elektromagneten mit den Merkmalen aus dem Oberbegriff des Patentanspruchs 1 gemäß dem kennzeichnenden Teil dieses Patentanspruchs der Ankerstößel rohrförmig aus einem ebenen Blech hergestellt ist und einstückig die durch nach radial außen gestelltes Blechmaterial gebildete Antiklebscheibe aufweist. Erfindungsgemäß werden also Ankerstößel und Antiklebscheibe einstückig aus einem ebenen Blech hergestellt. Grundsätzlich kann diese Herstellung als Stanzbiegeteil oder als Tiefziehteil erfolgen und, insbesondere bei hohen Stückzahlen, hochgradig automatisiert sein. Durch die Einstückigkeit verringert sich der Montageaufwand beträchtlich. Auch wird die Prozeßsicherheit erhöht, da die Möglichkeiten von Montagefehlem reduziert sind. Insgesamt kann somit ein erfindungsgemäßer Elektromagnet kostengünstig und in hervorragender Qualität hergestellt werden.

Vorteilhafte Ausgestaltungen eines erfindungsgemäßen Elektromagneten kann man den Unteransprüchen 2 bis 8 entnehmen.

Bei der Herstellung als Tiefziehteil wird das Blechmaterial, aus dem der Ankerstößel gefertigt ist, im Bereich der Antiklebscheibe gestaucht und dadurch die Antiklebscheibe gebildet. Ist jedoch ein Radialspalt zwischen dem Ankerstößel und der zentralen Bohrung des Polkerns vorhanden, den die Antiklebscheibe überbrücken muß, so ist letztere unter Umständen mit einem solch großen Außendurchmesser zu versehen, daß sich beim Tiefziehen Schwierigkeiten ergeben. Ist der Ankerstößel gemäß Patentanspruch 2 ein Stanzbiegeteil, so wird die Antiklebscheibe bevorzugt dadurch erhalten, daß mehrere Blechlaschen aus der Wand des Ankerstößels herausgeschnitten und unter Bildung von Öffnungen zur Bildung der Antiklebscheibe nach außen weggebogen sind. Insbesondere befinden sich die Öffnungen außerhalb des Magnetankers, so daß sie zum Ölaustausch zwischen den beiden Teilräumen des Ankerraums beidseits des Magnetankers und zwischen dem Ankerraum und einem Raum vor dem Polkern genutzt werden können. Die Bildung der Antiklebscheibe durch einzelne Blechlaschen hat zudem den Vorteil, daß die Antiklebscheibe einen Radialspalt zwischen dem Ankerstößel und dem Polkern nicht vollständig verschließt, auch wenn sie am Polkern anliegt. Dies ist anders bei einer umlaufenden Antiklebscheibe.

Weil es sich gut verarbeiten läßt, wird vorzugsweise ein recht dünnes Blechmaterial verwendet. Man kann dann eine Antiklebscheibe, die dicker als die Stärke des Blechmaterials ist, dadurch erhalten, daß man die Blechlaschen gemäß Patentanspruch 3 faltet.

Besonders günstig ist es, wenn gemäß Patentanspruch 6 der Ankerstößel an seiner oder in der Nähe seiner dem Magnetanker abgewandten Stirnseite eine weitere Öffnung besitzt, über die unabhängig vom Radialspalt zwischen dem Polkern und dem Ankerstößel ein Ölaustausch zwischen den Hohlräumen des Elektromagneten und einem damit zusammengebauten Ventil stattfinden kann, um Volumenänderungen beim Bewegen des Magnetankers und des Ankerstößels oder um temperaturbedingte Volumenänderungen des sich in den Hohlräumen des Elektromagneten befindlichen Hydrauliköls ausgleichen zu können.

Die Erfindung betrifft insbesondere auch ein hydraulisches Ventil mit den Merkmalen aus dem Oberbegriff des Patentanspruchs 9. Eine offene Verbindung zwischen den Hohlräumen des Ventils und den Hohlräumen des Elektromagneten erhält man, auch wenn der Hohlkolben des Ventils am Polkern anliegt, dadurch, daß sich in der Stirnwand des Hohlkolbens eine zu dessen Hohlraum und bei am Polkern anliegendem Hohlkolben zur zentralen Bohrung des Polkerns hin offene Verbindungsbohrung befindet. Insbesondere ist gemäß Patentanspruch 10 diese Verbindungsbohrung zu einer zentralen Öffnung in der Stirnseite des Ankerstößels hin offen, so daß durch die Stirnseite des Ankerstößels hindurch ein Ölaustausch zwischen dem Ventil und dem Elektromagneten stattfinden kann.

Ein Ausführungsbeispiel eines erfindungsgemäßen hydraulischen Ventils ist in der Zeichnung dargestellt. An Hand der Figuren dieser Zeichnung wird die Erfindung nun näher erläutert.

Es zeigen
Figur 1 einen Längsschnitt durch das Ausführungsbeispiel,

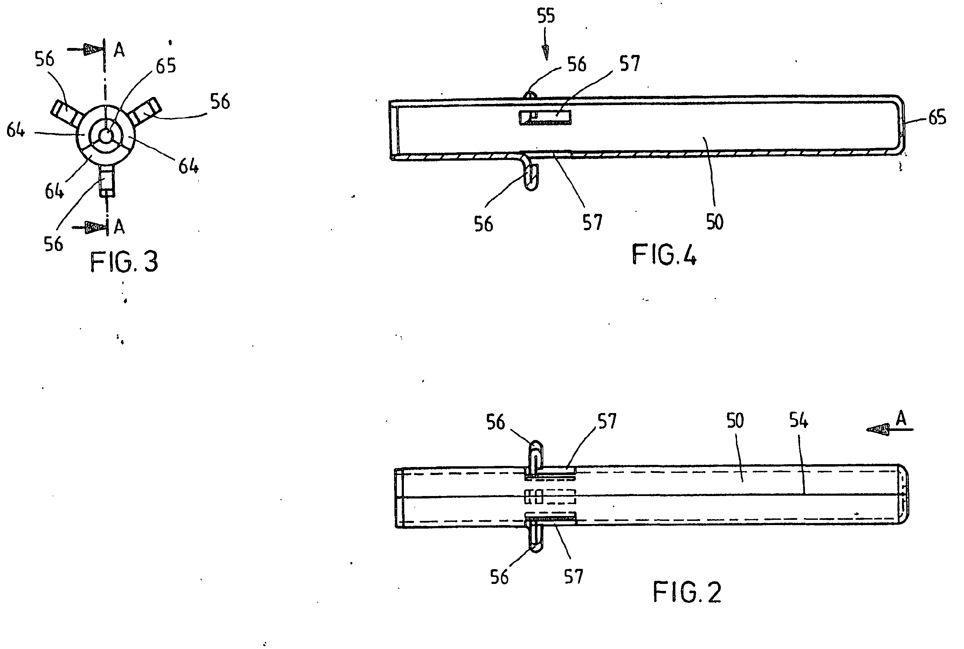

Figur 2 eine Seitenansicht des bloßen Ankerstößels,
Figur 3 eine Ansicht des Ankerstößels in Richtung des Pfeiles A aus Figur 1 und, Figur 4 einen Schnitt durch den Ankerstößel entlang der Linie A-A aus Figur 3.

Das gezeigte hydraulische Ventil weist einen Elektromagneten 10 und einen Hydraulikteil 11 auf. Letzterer besteht im wesentlichen aus einem hülsenförmigen Ventilgehäuse 12 mit einer Axialbohrung 13 und einem Ventilschieber 14, der als Hohlkolben mit einer zur einen Stirnseite hin offenen Sackbohrung 15 ausgebildet ist. Durch eine Druckfeder 16 ist der Ventilschieber 14 in eine Endstellung belastet, in der er an einem Polkern 17 des Elektromagneten 10 anliegt

Außen an dem Ventilgehäuse 12 sind drei axial voneinander beabstandete Ringnuten 18, 19 und 20 gebildet, von denen die beiden äußeren Ringnuten 18 und 20 zur fluidischen Verbindung mit einem hydraulischen Verbraucher vorgesehen sind. Der mittleren Ringnut 19 läuft im Betrieb Druckflüssigkeit von einer Pumpe zu. Die drei Ringnuten bilden drei Anschlüsse des Ventils. Ein vierter Anschluß wird durch die dem Elektromagneten 10 abgewandte axiale Öffnung 21 des Ventilgehäuses 12 gebildet. Aus der Öffnung 21 kann die Druckflüssigkeit zu einem Tank zurückfließen. In einer Neutralstellung des Ventilschiebers 14 sind alle vier Anschlüsse gegeneinander abgesperrt. Je nach der Richtung, in die der Ventilschieber aus der Neutralstellung bewegt wird, wird der eine Verbraucheranschluß mit Pumpe bzw. Tank und der andere Verbraucheranschluß mit Tank bzw. Pumpe verbunden. In die verschiedenen Positionen wird der Ventilschieber im Zusammenspiel zwischen der Druckfeder 16 und dem Elektromagneten 10 gebracht.

Der schon erwähnte Polkern 17 des Elektromagneten 10 setzt sich einstückig aus einem scheibenförmigen Abschnitt 26, der auf der einen Seite mit einer Einsenkung zur Aufnahme des Ventilgehäuses 12 versehen ist, und einem Zapfen 27 zusammen, der an der der Einsenkung gegenüberliegenden Seite von dem Abschnitt 26 absteht. Das Ventilgehäuse 12 ist mit dem Polkern 17 und damit mit dem Elektromagneten 10 dadurch fest verbunden, daß in eine umlaufende Nut 28 des Ventilgehäuses 12 Material des Polkerns eingedrückt ist.

Über den Zapfen 27 des Polkerns 17 ist eine aus einem dünnen Blech bestehende Büchse 29 geschoben, die mit dem Polkern 17 einen Ankerraum 30 des Elektromagneten 10 umschließt. Der Polkern 17 trägt am freien Ende des Zapfens 27 einen umlaufenden Kragen 31, der radial innen kreiszylindrisch und radial außen kegelig gestaltet ist. Vor dem Kragen 31 verkleinert sich die Büchse 29 in ihrem Durchmesser auf einen Wert, der in etwa gleich dem Innendurchmesser des Kragens 31 ist. Über den kleineren Abschnitt der Büchse 29 ist ein Polrohr 32 geschoben, das einen bestimmten lichten Abstand von dem Kragen 31 des Polkerns 17 hat und dessen Außendurchmesser gleich dem Außendurchmesser der Büchse 29 im Bereich des Zapfens 27 des Polkerns 17 ist. Der Zapfen 27 des Polkerns 17, die Büchse 29 und das Polrohr 32 bilden somit in ihrer Gesamtheit einen Kreiszylinder. Polkern 17 und Polrohr 32 sind aus einem magnetisierbaren Material hergestellt, während die Büchse 29 amagnetisch ist.

Auf den erwähnten Kreiszylinder ist die Magnetspule 35 aufgeschoben. Diese enthält zunächst einen aus Kunststoff geformten Wicklungsträger 36, auf den zwischen zwei Flanschen die Wicklung 37 aufgewickelt ist. Am einen Flansch ist in den Wicklungsträger 36 eine aus einem magnetisierbaren Material bestehende Polscheibe 38 eingespritzt, die innen stramm am Polrohr 32 anliegt. Nach dem Aufwickeln der Wicklung 37 ist der Wicklungsträger 36 mit einem zweiten Kunststoff umspritzt, der auch die Wicklung 37 abdeckt und mit dem ein elektrischer Anschlußstecker 39 gebildet ist, der an der dem Ventilgehäuse 12 abgewandten Seite des Elektromagneten 10 axial absteht. Die Magnetspule 35 wird von einem Blechgehäuse 40 umgeben, das aus einem magnetisierbaren Material tiefgezogen ist, an dem die Polscheibe 38 an ihrem Außenrand anliegt und das mit dem scheibenförmigen Abschnitt 26 des Polkerns 17 durch Eindrücken von Material in eine umlaufende Nut 41 fest verbunden ist.

Im Ankerraum 30 befindet sich ein beweglicher Magnetanker 45, der in der Büchse 29 eng, aber leichtgängig axial geführt ist. Durch den Magnetanker geht zentral eine gestufte Bohrung 46 hindurch, deren im Durchmesser kleinerer Bohrungsabschnitt an der dem Boden der Büchse 29 zugewandten Stirnseite 47 und deren Bohrungsabschnitt mit dem größeren Durchmesser an der dem Polkern 17 zugewandten Stirnseite 49 des Magnetankers 45 offen ist.

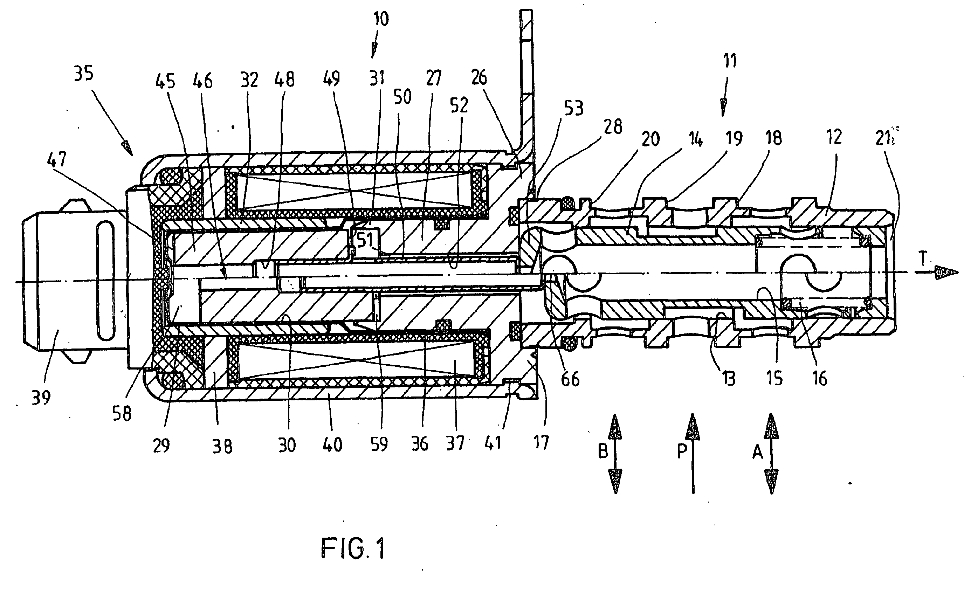

In den Bohrungsabschnitt 48 des Magnetankers 45 ist ein Ankerstößel 50 eingesetzt, der unter Bildung eines Radialspaltes 51 durch eine zentral durch den Polkern 17 hindurchgehende Axialbohrung 52 hindurchführt und den Ventilschieber 14 an einer die Sackbohrung 15 abschließenden Stirnwand 53 beaufschlagen kann. In der in Figur 1 in der oberen Hälfte gezeigten Endstellung des Ventilschiebers 14 liegt dieser am Polkern 17 an. Magnetanker 45 und Ankerstößel 50 sind insgesamt geringfügig kürzer als der lichte Abstand zwischen dem Boden der Büchse 29 und der Stirnwand 53 des Ventilschiebers 14, so daß sichergestellt ist, daß bei einer Bewegung in diese Endstellung der Ventilschieber nicht auf den Ankerstößel 50 hämmert. Es gibt also eine kleine Strecke innerhalb des Bewegungsbereichs des Magnetankers 45, in der der Ankerstößel 50 nicht am Ventilschieber 14 anliegt.

Der Ankerstößel 50 ist als Stanzbiegeteil aus einem ebenen Blech hergestellt, wobei zunächst ein entsprechender Blechzuschnitt ausgestanzt und dann der Blechzuschnitt zu einem Röhrchen gerollt ist. Entsprechend läuft längs des Ankerstößels 50 ein Spalt 54 entlang. Eine Antiklebscheibe 55, durch die sichergestellt ist, daß zwischen der Stirnseite 49 des Magnetankers 45 und dem Polkern 17 ein axialer Mindestabstand nicht unterschritten wird, ist einstückig mit dem Ankerstößel 50 ausgebildet. Die Antiklebscheibe 55 ist dadurch geschaffen, daß über den Umfang des Ankerstößels 50 gleichmäßig verteilt drei rechteckförmige Blechlaschen 56 an drei Seiten ausgeschnitten und um eine Biegekante an der vierten Seite nach außen abgebogen sind, so daß sie radial abstehen. Jede Blechlasche 56 ist noch einmal gefaltet, so daß die durch die drei Blechlaschen gebildete Antiklebscheibe eine Dicke hat, die doppelt so groß wie die Blechstärke ist. Der Ankerstößel 50 ist so weit in den Magnetanker 45 eingeschoben, daß die Antiklebscheibe 55 an der Stirnseite 49 des Magnetankers anliegt. Die durch das Abbiegen der Blechlaschen 56 entstandenen Öffnungen 57 befinden sich, vom Magnetanker 45 aus betrachtet, jenseits der Antiklebscheibe 55, werden also durch den Magnetanker 45 nicht verschlossen, wie dies der Fall wäre, wenn die Blechlaschen 56 so aus dem Blech ausgeschnitten wären, daß sich die entstandenen Öffnungen 57 innerhalb der Bohrung 46 des Magnetankers, also auf der anderen Seite der Antiklebscheibe 55 befänden.

Die Öffnungen 57 dienen zusammen mit der Bohrung 46 dem Ölaustausch zwischen den beiden sich vor den beiden Stirnseiten 47 und 49 befindlichen Teilräumen 58 und 59 des Ankerraums 30 und zusammen mit dem Radialspalt 51 auch dem Ölaustausch zwischen den Hohlräumen des Elektromagneten und des Hydraulikteils 11. In der in der oberen Hälfte der Figur 1 gezeigten Endstellung des Magnetankers 45 ist der Teilraum 58 am kleinsten und der Teilraum 59 am größten. Bewegt sich nun der Magnetanker 45 in Richtung der in der unteren Hälfte der Figur 1 gezeigten Endstellung, so fließt das aus dem Teilraum 59 verdrängte Öl über die Öffnungen 57, das Innere des Ankerstößels 50 und die Bohrung 46 im Magnetanker 45 in den Teilraum 58. Ein notwendiges Zusatzvolumen fließt aus dem Radialspalt 51 über die Öffnungen 57 in den Teilraum 58. Dabei ist ein freier Ölfluß aus dem Teilraum 59 bis zur Anlage der Antiklebscheibe 55 am Polkern 17 möglich, da zwischen den Blechlaschen 56 ein großer peripheraler Abstand besteht und das Öl zwischen den Blechlaschen 56 unmittelbar in den Radialspalt 51 eintreten kann. Umgekehrt wird bei einer Bewegung des Magnetankers 45 aus der in der unteren Hälfte der Figur 1 gezeigten Endstellung in Richtung zur anderen Endstellung hin aus dem Teilraum 58 Öl verdrängt, das über die Bohrung 46 im Magnetanker 45, über das Innere des Ankerstößels 50 und über die Öffnungen 57 in den Teilraum 59 und, soweit es überschüssig ist, in den Radialspalt 51 gelangt. Die Größe des vorher erwähnten Zusatzvolumens und die Größe der jetzt erwähnten Überschußmenge und die Größe des Radialspaltes 51 sind dabei so aufeinander abgestimmt, daß kein Öl aus dem Hydraulikteil 11 in den Ankerraum 30 gelangt. Vielmehr wird bei einer Bewegung des Magnetankers 45 nur innerhalb des Radialspaltes 51 eine Ölsäule hin und her geschoben. Auf diese Weise bleibt der anfänglich mit sauberem Öl gefüllte Ankerraum weitgehend vor verschmutztem Öl geschützt, so daß die Gefahr, daß in den Ankerraum 30 Schmutz eingetragen wird und der Magnetanker klemmt, gering ist.

An der dem Ventilschieber 14 zugewandten Stirnseite des Ankerstößels 50 sind drei kegelstumpfförmige Segmente 64 ausgeschnitten und nach innen in eine Radialebene gebogen. Dadurch ist eine große Anlagefläche zwischen dem Ankerstößel 50 und dem Ventilschieber 14 geschaffen. Zentral lassen die Segmente 64 eine kreisrunde Öffnung 65 frei, deren Querschnitt wesentlich kleiner als der Querschnitt des Radialspaltes 51 ist und die deshalb für den während der Bewegungen des Magnetankers notwendigen Ölaustausch nur eine untergeordnete Rolle spielt. Im Zusammenwirken mit einer zentralen Öffnung 66 in der Stirnwand 53 des Ventilschiebers 14 schafft die Öffnung 65 jedoch eine fluidische Verbindung zwischen der Sackbohrung 15 des Ventilschiebers 14 und den Hohlräumen des Elektromagneten 10 auch dann, wenn der Ventilschieber 14 mit seiner Stirnwand 53 am Polkern 17 anliegt. Es wird auf diese Weise verhindert, daß sich, wenn das System, innerhalb dessen das Ventil verwendet wird, stillsteht und sich das Öl abkühlt, im Elektromagneten 10 ein Unterdruck bildet.

## Patentansprüche

1. Elektromagnet, insbesondere zur Betätigung eines hydraulischen Ventils für ein Kraftfahrzeug, mit einem einen Ankerraum (30) begrenzenden Polkern (17), mit einem im Ankerraum (30) befindlichen bewegbaren Magnetanker (45), dessen minimaler axialer Abstand zum Polkern (17) durch eine Antiklebscheibe (55) bestimmt ist, und mit einem in eine zentrale Aufnahme (46) des Magnetankers (45) eingesetzten, durch eine zentrale Bohrung (52) des Polkerns (17), vorzugsweise unter Bildung eines Radialspaltes (51), hindurchgeführten und aus einem amagnetischen Material gefertigten Ankerstößel (50), über den vom Magnetanker (45) ein Ventilglied (14) betätigbar ist,
**dadurch, gekennzeichnet, daß** der Ankerstößel (50) rohrförmig aus einem ebenen Blech hergestellt ist und einstückig die durch nach radial außen gestelltes Blechmaterial (56) gebildete Antiklebscheibe (55) aufweist

2. Elektromagnet nach Anspruch 1, **dadurch gekennzeichnet, daß** der Ankerstößel (50) als Stanzbiegeteil aus einem ebenen Blech gerollt ist und daß nahe am Magnetanker (45) mehrere Blechlaschen (56) aus der Wand des Ankerstößels (50) herausgeschnitten und unter Bildung von Öffnungen (57) zur Bildung der Antiklebscheibe (55) nach außen weggebogen sind.

3. Elektromagnet nach Anspruch 2, **dadurch gekennzeichnet, daß** die Blechlaschen (56) zur Erhöhung der Dicke der gebildeten Antiklebscheibe (55) zumindest einmal gefaltet sind.

4. Elektromagnet nach Anspruch 3, **dadurch gekennzeichnet, daß** die einzelnen Blechlaschen (56) und Öffnungen (57) den gleichen Winkelabstand voneinander haben.

5. Elektromagnet nach Anspruch 4, **dadurch gekennzeichnet, daß** drei Blechlaschen (56) und drei Öffnungen (57) mit einem jeweiligen Abstand von 120 Grad voneinander vorhanden sind.

6. Elektromagnet nach einem vorhergehenden Anspruch, **dadurch gekennzeichnet, daß** der Ankerstößel (50) an seiner oder in der Nähe seiner dem Magnetanker (45) abgewandten Stirnseite eine weitere Öffnung (65) besitzt.

7. Elektromagnet nach einem vorhergehenden Anspruch, **dadurch gekennzeichnet, daß** an der dem Magnetanker (45) abgewandten Stirnseite des Ankerstößels (50) Material nach innen umgebogen ist.

8. Elektromagnet nach Anspruch 7, **dadurch gekennzeichnet, daß** an der Stirnseite unter Freilassung einer zentralen Öffnung (65) mehrere einzelne Blechsegmente (64) nach innen umgebogen sind.

9. Hydraulisches Ventil mit einem Elektromagneten (10) nach einem vorhergehenden Anspruch und mit einem Hohlkolben (14), der sich in einer an den Polkern (17) anschließenden Ventilbohrung (13) befindet und der in einer Endstellung mit einer den Hohlraum (15) in ihm begrenzenden Stirnwand (53), die vom Ankerstößel (50) beaufschlagbar ist, an dem Polkern (17) anliegt, **dadurch gekennzeichnet, daß** sich in der Stirnwand (53) des Hohlkolbens (14) eine zum Hohlraum (15) und bei am Polkern (17) anliegendem Hohlkolben (14) zur zentralen Bohrung (52) des Polkerns (17) hin offene Verbindungsbohrung (66) befindet.

10. Hydraulisches Ventil nach Anspruch 9, **dadurch gekennzeichnet, daß** die Verbindungsbohrung (66) in der Achse des Hohlkolbens (14) liegt und bei am Polkern (17) anliegendem Hohlkolben (14) zür zentralen Öffnung (65) in der Stirnseite des Ankerstößels (50) hin offen ist.

## Revendications

1. Electro-aimant en particulier pour l'actionnement d'une soupape hydraulique pour un véhicule automobile comprenant un noyau polaire (17) limitant un espace d'induit (30) avec une armature battante mobile (45) qui se trouve dans l'espace d'induit (30), la distance minimale axiale de celle-ci vers le noyau polaire (17) est déterminée par un disque anticollage (55), et avec un poussoir d'induit (50) posé dans une réception centrale (46) de l'armature battante (45) et passant à travers un perçage (52) central du noyau polaire (17), de préférence avec formation d'une fente radiale (51) et fabriqué en une matière antimagnétique et par lequel un élément de soupape (14) peut être actionnée par l'armature battante (45)
**caractérisé en ce que** le poussoir d'induit (50) est fabriqué en forme tubulaire d'une tôle plane et comprend d'un seul tenant le disque anticollage (55), formé par une matière en tôle (56) posé radialement vers l'extérieur.

2. Electro-aimant selon revendication 1, **caractérisé en ce que** le poussoir d'induit (50) est roulé comme pièce decoupée d'une tôle plane et qu'à proximité de l'armature battante (45) plusieurs éclisses en tôle (56) sont découpées de la paroi du poussoir d'induit (50) et sont courbées vers l'extérieur par la formation des ouvertures (57) pour former le disque anticollage (55).

3. Electro-aimant selon revendication 2, **caractérisé en ce que** les éclisses en tôle (56) sont pliées au moins une fois pour augmenter l'épaisseur du disque anticollage (55) formé.

4. Electro-aimant selon revendication 3, **caractérisé en ce que** les éclisses en tôle (56) individuelles et les ouvertures (57) individuelles ont la même distance angulaire l'une de l'autre.

5. Electro-aimant selon revendication 4, **caractérisé en ce que** trois éclisses en tôle (56) et trois ouvertures (57) se trouvent à la distance de chaque fois 120 degrés l'une de l'autre.

6. Electro-aimant selon une des revendications précédentes, **caractérisé en ce que** le poussoir d'induit (50) comprend dans ou à proximité de son côté frontal détourné de l'armature battante (45) une ouverture (65) supplémentaire.

7. Electro-aimant selon une des revendications précédentes, **caractérisé en ce que** sur le côté frontal du poussoir d'induit (50) détourné de l'armature battante (45) une matière est courbée vers l'intérieur.

8. Electro-aimant selon revendication 7, **caractérisé en ce que** dans le côté frontal par réservation d'une ouverture centrale (65) plusieurs segments en tôle individuels sont courbés vers l'intérieur.

9. Soupape hydraulique avec un electro-aimant (10) selon une revendication précédante et avec un piston creux (14) qui se trouve dans un perçage de soupape (13) adjoint au noyau polaire (17) et lequel en fin de course est ajusté au noyau polaire (17) avec un côté frontal (53) limitant la cavité (15) en son intérieur et pouvant être actionné par le poussoir d'induit (50) **caractérisé en ce que** dans la paroi frontale (53) du piston creux (14) se trouve un perçage de liaison (66) ouvert vers la cavité (15) et que si le piston creux (14) colle au noyau polaire (17), le perçage de liaison (66) est ouvert vers le perçage central (52).

10. Soupape hydraulique selon revendication 9, **caractérisée en ce que** le perçage de liaison (66) se trouve dans l'axe du piston creux (14) et que si le piston creux (14) colle au noyau polaire (17), le perçage est ouvert vers l'ouverture centrale (65) sur le côté frontal du poussoir d'induit (50).

## Claims

1. An electromagnet, in particular for actuating an hydraulic valve for a motor vehicle, with a pole core (17) bounding an armature space (30), with a movable magnet armature (45) which is situated in the armature space (30) and of which the minimum axial distance from the pole core (17) is determined by an anti-adhesion disc (55), and with an armature plunger (50) which is inserted into a central receiving means (46) of the magnet armature (45) and passes through a central bore (52) in the pole core (17), preferably whilst forming a radial gap (51), and which is produced from a non-magnetic material and by way of which a valve member (14) is actuable by the magnet armature (45), **characterized in that** the armature plunger (50) is produced in the form of a tube from a flat metal sheet and integrally comprises the anti-adhesion disc (55) formed by metal-sheet material (56) set radially on the outside.

2. An electromagnet according to Claim 1, **characterized in that** the armature plunger (50) is rolled in the form of a punched bent part from a flat metal sheet, and a plurality of metal-sheet fastening plates (56) are cut out of the wall of the armature plunger (50) in the vicinity of the magnet armature (45) and are bent away towards the outside whilst forming openings (57) in order to form the anti-adhesion disc (55).

3. An electromagnet according to Claim 2, **characterized in that** the metal-sheet fastening plates (56) are folded at least once in order to increase the thickness of the anti-adhesion disc (55) formed.

4. An electromagnet according to Claim 3, **characterized in that** the individual metal-sheet fastening plates (56) and openings (57) are at the same angular interval from one another.

5. An electromagnet according to Claim 4, **characterized in that** three metal-sheet fastening plates (56) and three openings (57) are present at a respective interval of 120° from one another.

6. An electromagnet according to a preceding Claim, **characterized in that** the armature plunger (50) has a further opening (65) on or in the vicinity of its end face remote from the magnet armature (45).

7. An electromagnet according to a preceding Claim, **characterized in that** material is bent over towards the inside on the end face of the armature plunger (50) remote from the magnet armature (45).

8. An electromagnet according to Claim 7, **characterized in that** a plurality of individual metal-sheet segments (64) are bent over towards the inside on the end face so as to leave free a central opening (65).

9. An hydraulic valve with an electromagnet (10) according to a preceding Claim and with a hollow piston (14) which is arranged in a valve bore (13) adjoining the pole core (17) and which rests against the pole core (17) in an end position with an end wall (53) which bounds the cavity (15) in it and which is capable of being acted upon by the armature plunger (50), **characterized in that** a connecting bore (66) open towards the cavity (15) and, when the hollow piston (14) rests against the pole core (17), towards the central bore (52) in the pole core (17), is present in the end wall (53) of the hollow piston (14).

10. An hydraulic valve according to Claim 9, **characterized in that** the connecting bore (66) is situated in the axis of the hollow piston (14) and, when the hollow piston (14) rests against the pole core (17), is open towards the central opening (65) in the end face of the armature plunger (50).
